# EUROPEAN PATENT SPECIFICATION

(11) **EP 1 417 775 B1**
(45) Date of publication and mention of the grant of the patent: **03.01.2007**
(21) Application number: 02787178.9
(22) Date of filing: 01.05.2002
(51) Int. Cl.: H04B 1/38, H04M 1/00

(54) **PERSONALIZING ELECTRONIC DEVICES AND SMART COVERING**
PERSÖNLICHE GESTALTUNG ELEKTRONISCHER GERÄTE UND INTELLIGENTE ABDECKUNG
PERSONNALISATION DE DISPOSITIFS ELECTRONIQUES ET COUVERCLES EVOLUES

(30) Priority: 17.07.2001 US 306326 P; 01.03.2002 US 87098
(43) Date of publication of application: 12.05.2004
(73) Proprietor: Wildseed, Ltd., Kirkland, WA 98033 (US)
(72) Inventor: ENGSTROM, Eric, G., Kirkland, WA 98033 (US); GRAHAM, Tyrol, R., Seattle, WA 98122 (US)
(74) Representative: Moore, Barry
(86) International application number: PCT/US2002/013803
(87) International publication number: WO 2003/009484

(56) References cited:
- WO-A-98/39852
- US-A- 5 495 241
- US-A- 5 537 673
- US-A- 5 694 516
- US-A- 5 797 088
- US-A- 5 832 388
- US-A- 6 045 043

## Description

### Related Applications

The present application is a non-provisional application of provisional application 60/306.326, filed on 8/17/2001, having the same title, and claims priority to said provisional application.

### FIELD OF INVENTION

The invention relates to the field of personalizing electronic devices. More specifically, the invention relates to the personalization of mobile electronic devices.

### BACKGROUND OF THE INVENTION

Portable radio telephone devices are known from for example US 5 832 388. With the proliferation of such electronic devices, especially mobile electronic devices, such as, mobile phones, hand-held personal computers, and so forth, these devices have gained the status of personal appliances to a person. As a result, increasingly, users desire to personalize these devices. For example, in addition to a wide variety of body casing colors, interchangeable faceplates of various colors and artistic designs are available for a variety of mobile phones to allow the users to have even greater choices providing different physical appearances to their own devices. Additionally, a variety of non-standard screen-savers and ring tones can be downloaded into the devices to further personalize the devices. Similarly, hand-held personal computers and personal digital assistants also come in various colors, with various screen savers and wallpapers.

These approaches to personalization suffer from a number of disadvantages. First, they are disjoint. Typically, a user may go to a mall or an online e-commerce site to shop and purchase, e.g. a faceplate with design and/or color that is of interest to the user. Then, the user may go online to web sites to search and look for a custom ring tone or a screen saver of interest to the user. It is the user's responsibility to choose and combine the appropriate hardware, i.e. faceplate design/color, with the software behavior, i.e. custom ring tone etc. to create a total personality. The process is cumbersome for many users, especially for the more novice users, as the proliferation of mobile electronic devices reaches more and more users. Moreover, the approaches do not facilitate quick and timely changes to the personality to be taken on by the mobile electronic devices. These shortcomings apply equally to personalization of other electronic devices, such as game consoles. Thus, an improved approach to provide users with better personalization experience is desired.

The invention addresses these and the pictures by providing an electronic apparatus according to claim 1. Advantageous embodiments are provided in the dependent claims. The invention also provides a cover according to claim 8.

### BRIEF DESCRIPTION OF DRAWINGS

The invention is illustrated by way of example and not by way of limitation in the figures of the accompanying drawings, in which like references indicate similar elements and in which:
**FIGURE 1** illustrates an exemplary mobile electronic device, upon which one embodiment of the invention may be practiced;
**FIGURE 2A & 2B** illustrate one embodiment of the invention utilizing a mobile phone of **FIG. 1;**
**FIGURE 3** illustrates an alternate embodiment for integrating an electronic component with interchangeable coverings of mobile electronic devices to personalize the mobile electronic device;
**FIGURES 4A & 4B** illustrate another example of a mobile electronic device, upon which one embodiment of the invention may be practiced;
**FIGURE 5** illustrates an internal view of a contactless interchangeable PDA covering for a PDA;
**FIGURE 6** illustrates an example of personalizing a mobile electronic device, in accordance with one embodiment of the invention;
**FIGURES 7A & 7B** illustrate an architectural view of a mobile electronic device, which is intended to be representative of a mobile phone and a PDA, and an interchangeable covering, which is to be representative of an interchangeable covering; and
**FIGURES 8A & 8B** illustrate the operational flow of the relevant aspects of the enhanced interchangeable coverings for mobile electronic devices, in accordance with one embodiment of the invention.

### DETAILED DESCRIPTION OF THE INVENTION

For ease of understanding, the present invention will be primarily described in the context of wireless mobile phones and personal digital assistants. However, it is anticipated that the present invention may be practiced on a wide range of other electronic devices, including but are not limited to game consoles, media players, and other devices of the like. Accordingly, references to wireless mobile phones and personal digital assistants in the description to follow are merely illustrative, and are not to be read as limitations to the claims.

In the following description, various aspects of the invention will be described. However, it will be apparent to those skilled in the art that the invention may be practiced with only some or all aspects of the invention. For purposes of explanation, specific numbers, materials and configurations are set forth in order to provide a thorough understanding of the invention. However, it will also be apparent to one skilled in the art that the invention may be practiced without the specific details. In other instances, well-known features are omitted or simplified in order not to obscure the invention.

Parts of the description will be presented in terms of operations performed by a computer system, using terms such as data, flags, bits, values, characters, strings, numbers and the like, consistent with the manner commonly employed by those skilled in the art to convey the substance of their work to others skilled in the art. As well understood by those skilled in the art, these quantities take the form of electrical, magnetic, or optical signals capable of being stored, transferred, combined, and otherwise manipulated through mechanical and electrical components of the computer system, and the term computer system include general purpose as well as special purpose data processing machines, systems, and the like, that are standalone, adjunct or embedded.

Various operations will be described as multiple discrete steps in turn, in a manner that is most helpful in understanding the invention, however, the order of description should not be construed as to imply that these operations are necessarily order dependent. In particular, these operations need not be performed in the order of presentation.

In various embodiments of the invention, electronic components are integrated with interchangeable coverings of mobile electronic devices. This integration facilitates improved personalization of the mobile electronic devices and allows for the changing of personalizing themes of the mobile electronic device to be easy and quick.

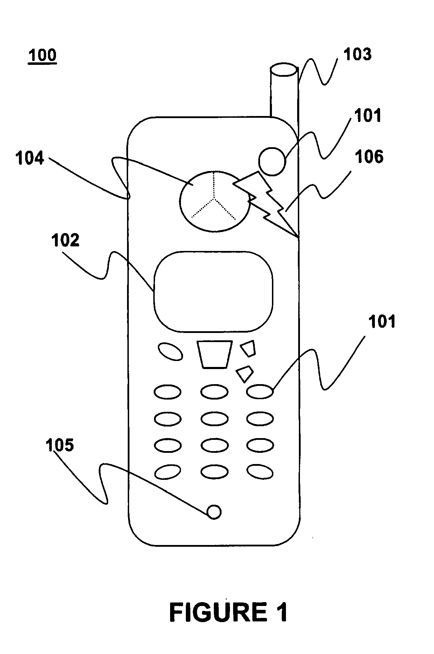

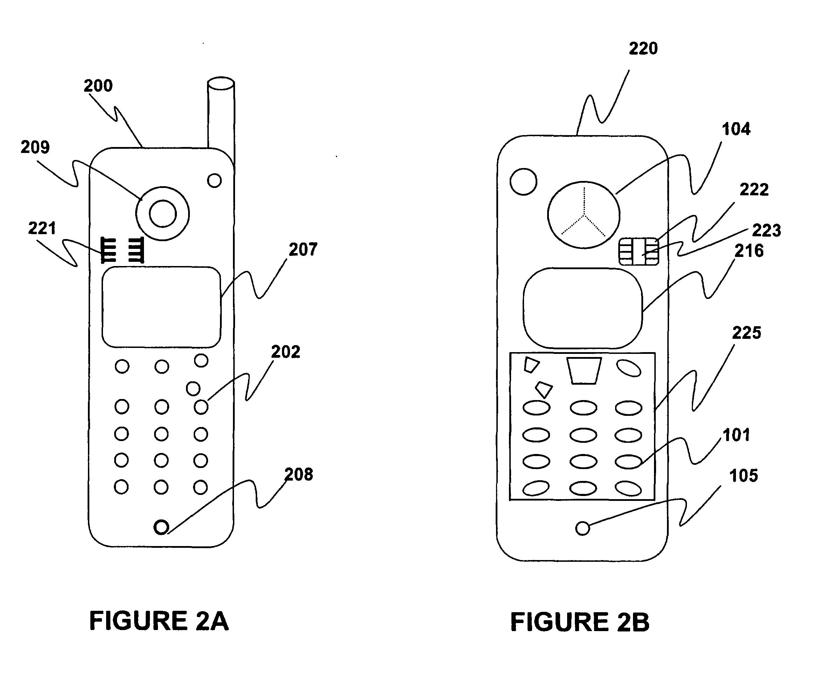

**FIGURE 1** illustrates an exemplary electronic device, upon which one embodiment of the invention may be practiced. Shown in **FIG.** 1, is a mobile phone **100** with its various components. These components may include a number of keys **101** for various user functions, a display **102** having a graphical user interface, an antenna **103** for receiving and transmitting signals wirelessly, an area for sound transmission **104,** and an area for sound reception **105.** Additionally, shown in **FIG. 1,** is a decoration **106,** on the surface of the mobile phone **100,** which may be on an interchangeable covering **220 (FIG. 2B),** incorporated with the teachings of the present invention. This decoration 106 is utilized to easily and quickly provide the mobile phone with visually perceivable attributes of a personality. This decoration **106** may be in the form of a decorative image integrated in the material making up the surface of the mobile phone **100,** a decorative color of the mobile phone **100,** a series of decorative images adhering to the surface of the mobile phone **100,** and so forth. Accordingly, a user may acquire a number of decorations **106** to the personal tastes of the user (not shown), and be able to quickly switch from one to the other.

**FIGURES 2A & 2B** illustrate one embodiment of the invention utilizing the mobile phone **100** of **FIG. 1.** Shown in **FIG. 2B,** the decorated interchangeable covering **220** of the mobile phone **100** is removed, revealing an internal view of the interchangeable covering **220.** Shown in FIG. 2A is the exposed mobile phone **200,** with its interchangeable covering **220** removed, exposing buttons (or electrical contacts) **202** that are pressed by a keypad **225** formed with keys **101** molded onto the interchangeable covering **220.** Shown in **FIGS. 2A & 2B,** the orientation of the exposed mobile phone **200** and the interchangeable covering **220** is such that the right side of the exposed mobile phone **200** corresponds to (or engages with) the left side of the interchangeable covering **220,** and the left side of the exposed mobile phone **200** corresponds to (or engages with) the right side of the interchangeable covering **220.** Additionally shown are a display, such as, a liquid crystal display (LCD) **207,** a microphone **208,** and a speaker **209.** The LCD **207** corresponds to a screen area **216** to display a graphical user interface **102.** The speaker **209** and the microphone **208** correspond to the area for sound transmission **104,** and the area for sound reception **105,** respectively on the interchangeable covering **220,** for sound to pass through.

In accordance with the illustrated embodiment of the present invention, interchangeable covering **220** includes electronic component **223** embedded in the interchangeable covering **220** having data and/or programming instructions for personalizing various behavioral or non-visual aspects of the personality of exposed mobile phone **200.** In accordance with one embodiment, the data and/or programming instructions provide a customized ring tone complementary to an aspect of a personalizing theme conveyed by the design and color of faceplate **220.** Additionally, for the embodiment, the data and/or programming instructions further include address specifications designating locations on a network where additional data and/or programming instructions for further enhancing the personality may be retrieved. The address specifications may be in the form of one or more Uniform Resource Locators (URLs). The interchangeable covering **220** may be placed on the exposed mobile phone **200** to be an integral component forming and personalizing the exposed mobile phone **200,** thus allowing the user to easily switch the personalizing theme of phone **100.**

From hereon forward (including the claims), for ease of understanding, "data and/or programming instructions" will simply be referred to as "data". Usage of the term "data" includes "data" as it is conventionally used, and/or "programming instructions", unless the implicit optional inclusion of "programming instructions" is explicitly excluded.

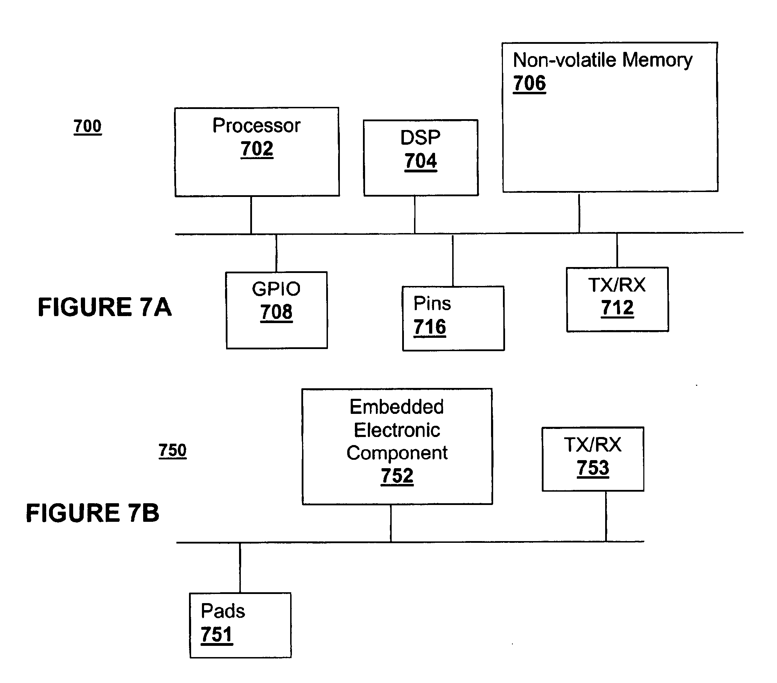

In order to facilitate exchange of data between the mobile phone **200** and the interchangeable covering **220** (after they have engaged each other), a coupler in the form of contact pins **221** is shown configured to match and engage contact pads **222** connected to an electronic component **223** embedded in the interchangeable covering **220,** in accordance with one embodiment of the invention. This electronic component **223** may be a memory, a processor, or a combination of both. These contact pins **221** may be pins that work in conjunction with contact pads **222** to form an interface, such as, but not limited to, a serial interface. The contact pads **222** may be formed over the embedded electronic component **223,** with leads from selected ones of the various components of the embedded electronic component **223,** being in connection with the contact pads **222.** The embedded electronic component **223** may transfer data to a mobile phone processor **702** (shown in **FIG. 7),** may receive data from the mobile phone processor **702,** and may receive power from the exposed mobile phone **200** such as, but not limited to, a 3 volt supply voltage.

Shown in **FIGS. 2A & 2B,** the contact pins **221** are on the exposed mobile phone **200,** while the contact pads **222** are on the interchangeable covering **220.** However, in order to couple the embedded electronic component **223** with the exposed mobile phone **200,** the contact pads **222** may be included in the exposed mobile phone **200,** while the contact pins **221** may be on the interchangeable covering **220.** The exposed mobile phone **200** or the interchangeable covering **220** would not include both the contact pads **222** and the contact pins **221** on the same device/component.

Additionally, in **FIG. 2B,** the interchangeable covering **220** is shown as substantially similar in shape, length, and width to the exposed mobile phone **200.** However, the interchangeable covering **220** may be of any shape and size to cover all or portions of the exposed mobile phone **200,** such as, but not limited to, an interchangeable covering that covers only a portion of the exposed mobile phone **200.** The interchangeable covering may cover only the face of the exposed mobile phone **200.** Additionally, it may cover the sides of the exposed mobile phone or portions thereof. The interchangeable covering may also cover the back of the exposed mobile phone or portions thereof. Further, a mobile phone may not necessarily be an exposed mobile phone, but instead, may be a fully assembled mobile phone that includes coupling capabilities to incorporate the advantages of the present invention. In one embodiment, the interchangeable covering is a molded covering.

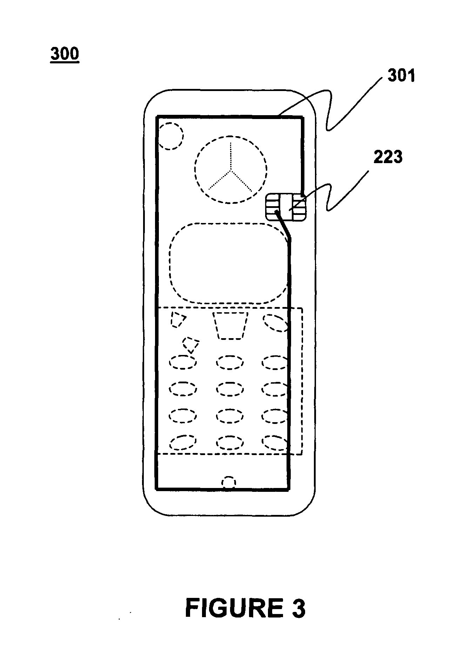

FIGURE 3 illustrates an alternate embodiment for integrating an electronic component with interchangeable coverings of mobile electronic devices to personalize the mobile electronic device. Shown in **FIG. 3** is an internal view of a contactless interchangeable covering **300.** The contactless interchangeable covering **300** has a number of turns of a conductive material **301,** such as, a wire thin enough to be embedded in the body of the contactless interchangeable covering **300.** The conductive material **300** forms an antenna for data signal transmission and reception, i.e., a contactless coupler. Shown in **FIG. 3,** the conductive material **301** is turned a number of times around the perimeter of the contactless interchangeable covering **300** to match the shape of the contactless interchangeable covering **300.** The shape of the conductive material may be in any form to transmit and receive data via electromagnetic signals, thereby, acting as an antenna. The ends of the conductive material **301** connect to the embedded electronic component **223** within the contactless interchangeable covering **300,** and this connection may be made by connecting to contact pads/pins connected to the embedded electronic component **223** to allow for data to be communicated via transmit/receive (shown as ref. **753** in **FIG. 7).** The conductive material **301** shown may be a thin wire; however, the conductive material **301** shown may also be any type of conductive material, such as, but not limited to, conductive ink. As shown in **FIG.3,** the conductive material **301** is connected to the electronic component **223** embedded in the contactless interchangeable covering **300.** Since, the contactless interchangeable covering **300** utilizes the conductive material **301** as the antenna for receiving and transmitting data to the mobile phone processor **702,** the contact pads and contact pins previously described are not necessary for transmission and reception of data and/or power. In this embodiment, contactless coupling is used to transmit and receive data and/or power between the contactless interchangeable covering and the mobile electronic device.

In the one embodiment shown in **FIG. 3,** power may be supplied to the embedded electronic component **223** within the contactless interchangeable covering **300** by electromagnetic signals from the mobile electronic device, mobile phone **100**. A larger power supply is available from a mobile electronic device because a possible power supply embedded in a contactless interchangeable covering may be limited by size.

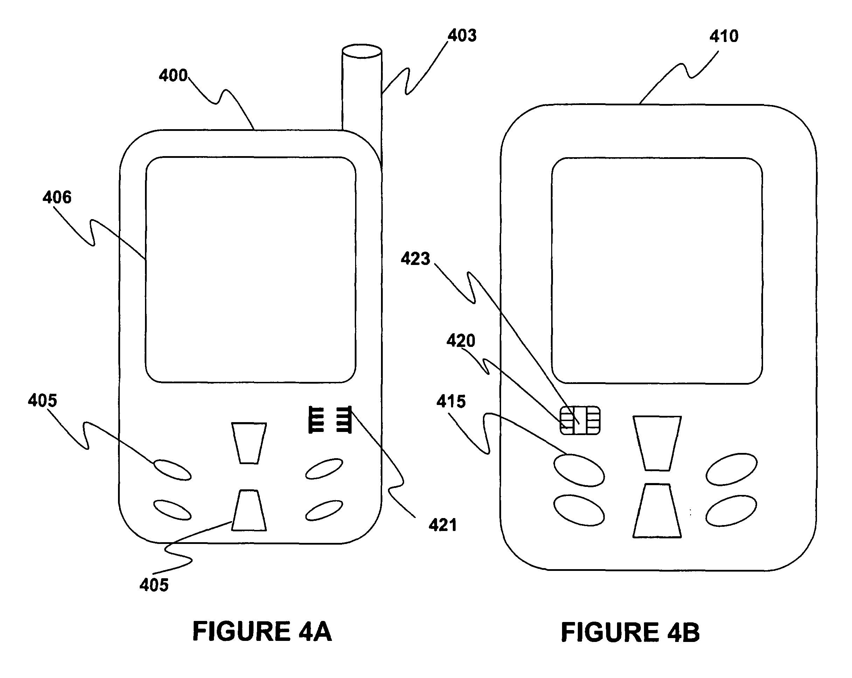

**FIGURES 4A & 4B** illustrate another example of an electronic device, upon which one embodiment of the invention may be practiced. Shown in **FIGS. 4A & 4B,** a mobile electronic device, a personal digital assistant (PDA)/handheld personal computer (handheld PC), collectively referred to as a PDA, has its interchangeable PDA covering **410** removed exposing an exposed PDA **400,** revealing an internal view of the interchangeable PDA covering **410.** In **FIGS.** 4A are shown various buttons **405** for activating certain functions, such as, but not limited to, scrolling through displayed information, an LCD **406** to display the information and form a graphical interface, and, optionally, an antenna **403** to receive and transmit data from the exposed PDA **400.** Shown on the interchangeable PDA covering **410,** are various openings **415** to allow the various buttons **405** to be pressed through the interchangeable PDA covering **410.**

The embodiment shown in **FIGS.** 4A **&** 4B also includes contact pads **420** on the interchangeable PDA covering **410** and contact pins **421** on the PDA **400.** As previously described, the contact pads **420** and the contact pins **421** allow for personalization of the PDA **400** by utilizing the embedded electronic component **423** (such as memory and/or processor) embedded behind the contact pads **420** on the interchangeable PDA covering **410.**

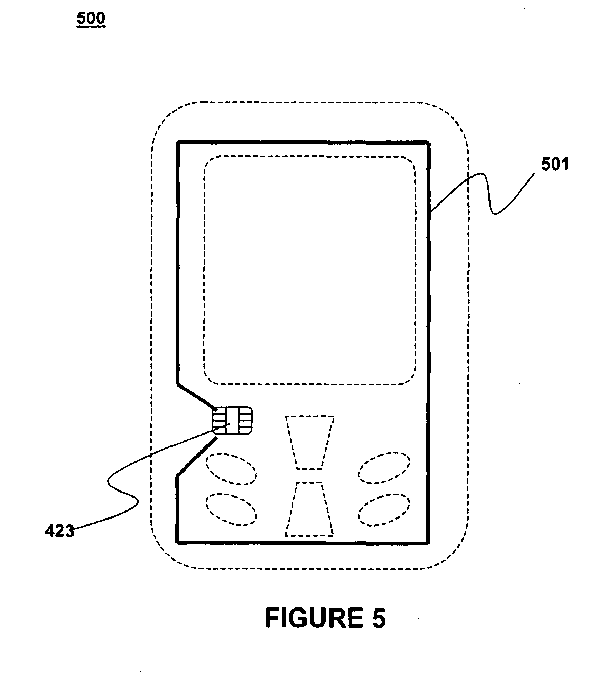

FIGURE **5** illustrates an internal view of a contactless interchangeable PDA covering **500** for the PDA **400.** As previously described with respect to the mobile phone **100,** the contactless interchangeable PDA covering **500** has a number of turns of a conductive material **501,** such as a wire thin enough to be embedded in the body of the contactless interchangeable PDA covering **500,** forming an antenna for signal transmission and reception. Also, the conductive material **501** may be of any type of conductive material, such as, but not limited to, conductive ink. Here again, the conductive material **501** is turned a number of times around the perimeter of the contactless interchangeable PDA covering **500.** The windings of the conductive material **501** of the contactless interchangeable PDA covering **500** form a contactless coupler facilitating exchange of data between the embedded electronic component **423** and the PDA **400.** Additionally, power may be supplied to the embedded electronic component **423** within the contactless interchangeable PDA covering **500** by electromagnetic signals from the mobile electronic device, the PDA **400.**

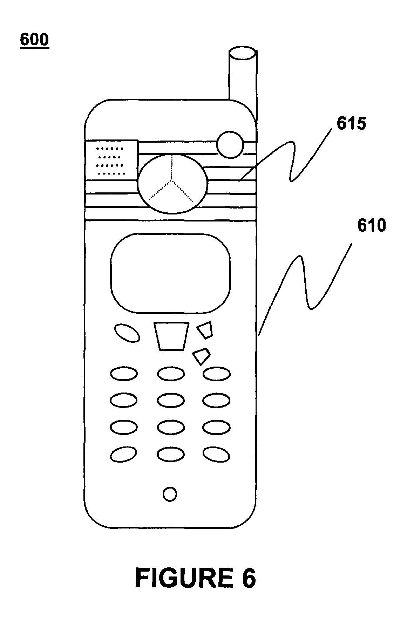

FIGURE **6** illustrates an example of personalizing an electronic device, in accordance with one embodiment of the invention. As shown in **FIG. 6,** a mobile electronic device, such as, a mobile phone **600,** has an interchangeable covering **610** attached. The interchangeable covering **610** includes a theme, such as, but not limited to, an American theme, where the theme includes visual representations as well as audio representations. The visual representations may include e.g. an American flag **615** imprinted on interchangeable covering **610.** Additionally, a processor **702 (FIG. 7)** of the mobile phone **600** exchanges other audio/visual related data with an electronic component **752** embedded in the interchangeable covering **610.** The embedded electronic component **752** has audio/visual data, as earlier described for embedded electronic components **223 & 423,** allowing the user to switch the personality of the mobile phone **600.** The audio/visual data can include, for example, a customizing ring tone complementary to the American theme.

For example, the processor **702** of the mobile phone **600,** may receive audio/visual data from the embedded electronic component **223 & 423** within the interchangeable covering **610** to provide a variety of American flag oriented functions for the mobile phone **600,** such as, but not limited to, a ring option that plays the "Star Spangled Banner", games that include learning the capitals of the 50 states, a screen saver in the form of a waving American flag, and/or a modification to the default voice mail greeting.

In another example, a user may require the appearance of the mobile phone to be subtle and professional during the business hours. Accordingly, a factory standard covering without personalizing themes is used during business hours. At the end of the business hours, the user may attend a sporting event of his/her favorite sports team. In order to support his/her particular team, the user may change the interchangeable covering to one with the team logo. Moreover, the data stored in the embedded electronic component of the interchangeable covering provide various non-visual manifestations, such as behavioral and/or audio manifestations, that are related to the team. For example, the audio manifestation may include the team song as the ring tone, and so forth.

In one embodiment, the interchangeable covering may incorporate both the contactless and the contact coupling configurations, i.e., an interchangeable covering having both windings of conductive material functioning as an antenna and contact pads exposed on the inside surface of the interchangeable covering. The interchangeable covering incorporating both the contactless and the contact coupling configurations may include data stored in an embedded electronic component to detect if a physical coupling has occurred. If a physical coupling is detected, the data would be transferred through the physical coupling. However, if a physical coupling is not detected, the programming logic may await a wireless signal from a mobile electronic device to initialize a wireless coupling.

In one embodiment, the interchangeable covering of the present invention having a thematic appearance and complementary embedded electronic component may be in the form of an interchangeable skin. A skin is a thin flexible material in the form of a membrane, such as an elastomeric membrane, which may be molded to cover a mobile electronic device. This skin would add a personalized visual as well as non-visual touch to the mobile electronic device. The skin may be available in various thematic colors and designs, and the embedded electronic component in the interchangeable skin includes thematic data that corresponds to the particular thematic colors and designs of the skin. Additionally, the skin may be of the non-molded type, whereby, the skin fits loosely on the mobile electronic device, such as, a loosely fitting waterproof enclosure. The interchangeable covering in the form of a waterproof enclosure may have an electronic component embedded within that is capable of causing a ring tone that sounds like e.g. a fog horn.

In an alternate embodiment, the interchangeable covering may be in the form of an interchangeable rigid covering, such as, but not limited to, a faceplate. That is, a hard material covering a mobile electronic device in the form of a snap-on type covering. This interchangeable rigid covering may be of the molded type.

The electronic component embedded within an interchangeable covering of a mobile electronic device might also include a variety of different data corresponding to multiple themes for selection. The visual design of such interchangeable covering would be a generic design suitable for the collection of themes included. These themes may include, for example, proprietary themes, owned by multiple proprietors or their licensees. Examples of proprietary themes include "Hello Kitty" theme of Sanrio Company, Ltd., Tokyo, Japan, and "Pokemon" theme of Nintendo Company, Ltd., Kyoto, Japan.

Further, the electronic component embedded in an interchangeable covering may include data for providing screen savers for various advertisers, various fonts to match various themes, various resource server specifications for various themes, and various phone numbers corresponding to various themes. The screen savers may be camouflage that blends with the design of covering. The resource server specifications may be used to contact a resource server for additional functionalities and/or contents. The resource specifications may be in the form of Uniform Resource Locators (URLs). In other embodiments, the data may include an identifier of the covering, and/or an approval code, both of which may be employed to facilitate access to the additional personalization functionalities and/or contents.

Optionally, in one embodiment, an interchangeable covering may further include light emitting diodes (LEDs) with included data controlling the LEDs. These LEDs may be utilized for various visual activities, such as, but not limited to, displaying a message, or lighting up corresponding to sounds.

The electronic component embedded in the interchangeable covering may also include names, phone numbers, resource server specifications, and email addresses, for use in wireless communication. When connected to the mobile phone, the names, phone numbers, resource server specifications, and email addresses may be inserted into a phone list contained within the mobile phone. The embedded electronic component may further contain audio content, such as music, which can be played on an audio player within the mobile phone. The audio content may be a form of an audio data file, such as, but not limited to, a moving pictures expert group (MPEG) audio layer 3 (MP3) data file, an MPEG-4 Structured Audio data file and so forth. The audio player may be in the form of instructions stored in non-volatile memory of the mobile phone/PDA or the embedded electronic component of the interchangeable covering to process audio data file and convert it into audio. Additionally, the embedded electronic component may contain other media content, such as, but not limited to, animation and/or video.

The embedded electronic component may also contain data for setting the voice that is used for voice messaging. This voice may be a prerecorded voice that provides instructions for retrieving voice messages. It may also be a prerecorded voice that answers the phone when the user does not answer the phone. The data for setting the voice may include the actual recordings. Alternatively, the data may include information that identifies voice recordings stored at a wireless provider's computer. When the actual recordings are stored at a wireless provider's computer, initialization of the settings includes sending a signal to the wireless provider indicating the selection of a prerecorded voice to use. The data may also include information that identifies voice recordings stored at an Internet service provider's computer, together with an address, such as resource server specifications, for locating the voice recording. During initialization of settings, this information is transmitted to the Internet service provider.

**FIGURES 7A & 7B** illustrate an architectural view of an electronic device **700,** which is intended to be representative of mobile phone **100** and PDA **500,** and an interchangeable covering **750,** which is to be representative of the interchangeable covering **220.** The interchangeable covering includes an electronic component **752** embedded in the interchangeable covering **750,** which is to be representative of the embedded electronic components **223 & 423,** in accordance with one embodiment of the invention. As previously described, the embedded electronic component **752** may be a memory, a CPU, or a combination of both.

As illustrated, mobile electronic device **700** includes elements found in conventional mobile electronic devices, such as processor **702,** digital signal processor (DSP) **704,** non-volatile embedded memory **706,** general-purpose input/output (GPIO) interface **708,** and transmit/receive (TX/RX) **712.** For the illustrated embodiment, mobile electronic device **700** also advantageously includes contact pins **716** to facilitate transfer of data to and from the electronic component **752** embedded in the interchangeable covering **750.** Additionally, the interchangeable covering **750** includes contact pads **751** to form an interface with the contact pins **716.** Optionally, non-volatile memory **706** may include instructions to decompress MPx data files (where MPx stands for any one of the MPEG standards), and these instructions to be executed by the processor **702** facilitating an audio player. In alternate embodiments, mobile electronic devices **700** may also include other components, such as an embedded radio.

Alternatively, as discussed above, if the interchangeable covering **750** is a contactless interchangeable covering, the processor device **702** receives and transmits data to the embedded electronic component **752** via the TX/RX **712.** The receiving and transmitting is facilitated by the conductive material **301** (shown in **FIG. 3)** included in the mobile electronic device **700** and a complementary TX/RX **753** included in the interchangeable covering **750.**

The electronic component **752** embedded in the interchangeable covering **750** may be a random access memory (RAM), an electrically erasable programmable read only embedded memory (EEPROM), read only embedded memory (ROM), a central processing unit (CPU), a subscriber identity module (SIM) smart card, or a combination thereof. The capabilities of components may be 1 Kilobyte of RAM, 16 Kilobytes of EEPROM, 24 Kilobytes of ROM, and an 8-bit microprocessor running at 5 Megahertz as the CPU. Because of the variety of components available as the electronic component **752** embedded in the interchangeable covering **750,** in one embodiment, the processor **702** may write and store data into the electronic component **752** embedded in the interchangeable covering **750.** For example, the processor may store certain telephone numbers in the embedded electronic component of interchangeable covering. If the electronic component **752** embedded in the interchangeable covering **750** is utilized to store certain type of data requiring security, the embedded electronic component **752** may be in the form of a CPU to process security instructions.

In one embodiment, embedded electronic component **752** may also include data to provide electronic coupons that allow a user of the wireless mobile electronic device to obtain discounts on purchases of items or services. The items or services may be related to the personalizing theme of the interchangeable covering, or related to the business of advertisers or sponsors of the interchangeable covering.

In one embodiment, embedded electronic component **752** may also include data to implement a font complementing the personalizing theme of the interchangeable covering. The font may correspond to personalizing themes, such as, but not limited to, an alien font from a science fiction series, and so forth.

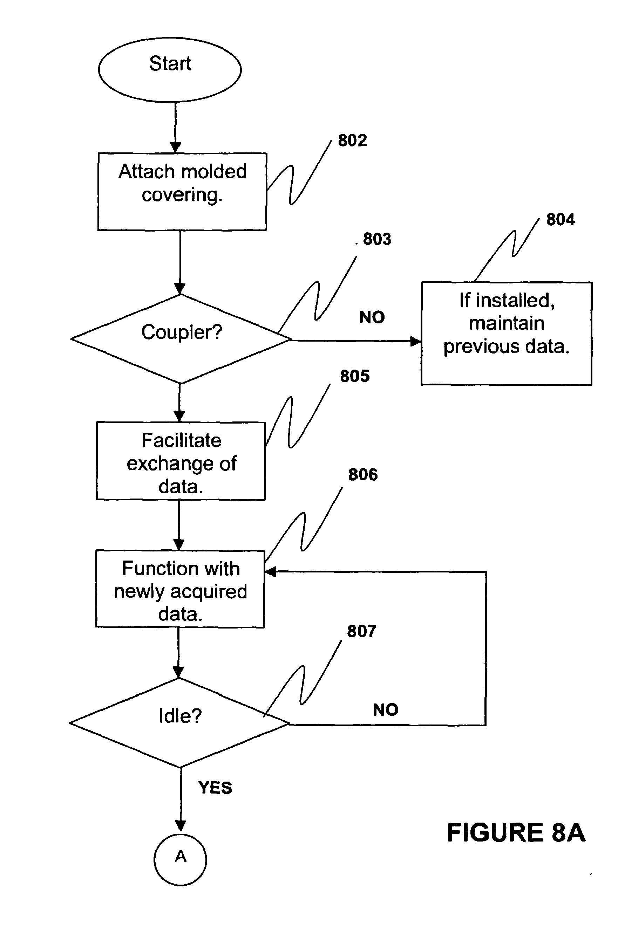

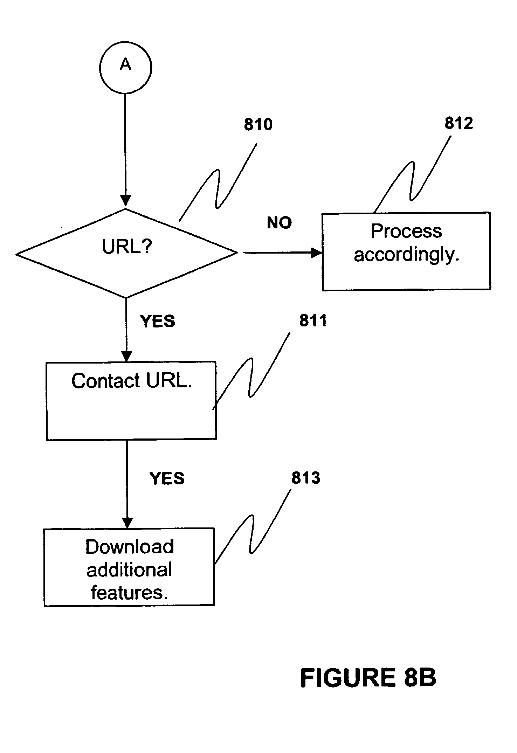

**FIGURES 8A & 8B** illustrate the operational flow of the relevant aspects of the enhanced main logic of phone/PDA to take advantage of improved interchangeable coverings with embedded personality for mobile electronic devices, in accordance with one embodiment of the invention. As illustrated in **FIG. 8A,** an interchangeable covering is attached onto a mobile electronic device, such as the previously described mobile phone and PDA **802.** In the process of initialization, the main logic checks for the presence of the interchangeable covering with embedded personalizing theme. The main logic determines whether the contacts of the mobile electronic device are in contact with the "contacts" of the interchangeable covering **803**. The "in contact" condition may be discerned, for example, by attaching a pull-up device to the mobile electronic device's contact, and contact with the interchangeable covering's contact causes a pull-down effect. The main logic determines whether contact is made based on whether a signal is in a high (pull-up) or a low (pull-down) state. As previously described, the coupler may be of a contact or a contactless type.

Once it is determined that contacts of the mobile electronic device are in contact with the "contacts" of the interchangeable covering, an exchange of data between the interchangeable covering and the mobile electronic device is facilitated **805**. The exchange of data is made between a processor included in the mobile electronic device and an embedded electronic component within the interchangeable covering. During this exchange of data, settings, such as, but not limited to, a customizing ring tone complementary to the personalizing theme of the interchangeable covering is immediately implemented in the mobile electronic device. Additionally, during the exchange of data, a resource server specification is exchanged. This resource server specification may be utilized to contact a resource server. The mobile electronic device functions with the newly acquired data **806**, i.e., mobile electronic device will ring in the customizing tone when receiving a subsequent call.

Once the mobile electronic device is functional with the newly acquired data with the settings in place, the main logic determines if an "idle" opportunity is available **807**, and this "idle" opportunity may be a predetermined period when the usage of the mobile electronic device is minimal. However, if there is no coupling between the interchangeable covering and the mobile electronic device, the mobile electronic device may maintain a previously installed data complementing a previous personalizing theme until a presence of an interchangeable covering with embedded personalizing theme is detected **804**.

Referring now to **FIG. 8B**, if an "idle" opportunity is available, the main logic determines if the resource server specification is in the form of an URL **810.** If the resource server specification is in the form of an URL, the processing of the URL involves contacting a resource server containing data related to personalization **811.** Once the resource server is contacted, the main logic may wirelessly access the resource server, and acquire additional data to further complement the personalizing theme **813**. However, if the retrieved data is not in the form of an URL, the main logic processes accordingly the retrieved data **812**.

Furthermore, if no contact data is available from the embedded electronic component, the main logic continues to function with the acquired data **806** (shown in **FIG. 8A**).

Accordingly, an interchangeable covering with embedded personality for an electronic device having capabilities to facilitate easy and user-friendly acquisition of personalization of the electronic device has been described. While the invention has been described in terms of the above-illustrated embodiments, one skilled in the art will recognize that the invention is not limited to the embodiments described. The invention can be practiced with modification and alteration within the scope of the appended claims. For example, the present invention may be practiced with options to allow a user to accept or reject all or a portion of the additional functionalities and/or content to be added to the base electronic device, as result of the engagement of the "smart" interchangeable covering. Another example is in some embodiments, in lieu of the employment of an electronic component, a bar code or a magnetic stripe having certain identification information be used instead to "couple" to the base electronic device (having complementary bar code or magnetic stripe "reader" capability), the type and/or location of the additional functionalities and/or contents. Another example is the inclusion of certain anti-piracy features, such as upon installation of the added functionalities and/or contents, the same combination of interchangeable cover and base electronic device is required for the installed additional functionalities and/or content to be available and/or useable. Thus, the description is to be regarded as illustrative instead of restrictive on the invention.

## Claims

1. A cover comprising:
a cover body 220 adapted to mate with an electronic apparatus 200;
the cover body having an exterior surface decorated to provide the electronic apparatus with one or more visually perceivable attributes; and
an electronic component 223 embedded within the cover body, having data stored therein to be at least partially transferred to the electronic apparatus for customizing functions of the electronic apparatus to operate with characteristics complementary to the visually perceivable attributes provided by the decorations of the exterior surface, while the cover is mated to the electronic apparatus.

2. The cover of claim 1, wherein the electronic component comprises data identifying to a processor of the electronic apparatus, which group of a plurality of covering groups the cover is a member of, each covering group having a decorative theme.

3. The cover of claim 1, wherein the electronic component is adapted to have data compris ing at least one of a resource server specification, an email address, an electronic coupon, a font style, an identifier identifying the interchangeable cover, and an approval code stored thereon.

4. The cover of claim 1, wherein the electronic component is adapted to have data comprising a selected one of a pointer to an audio data file and a audio data file, where the audio data file complements the visually perceivable attributes provided by the decorations of the exterior surface of the cover body stored thereon.

5. The cover of claim 1, wherein the electronic component is adapted to have data compris ing at least a selected one of a pointer to a screen saver, a pointer to a video data file, a screen saver and a video data file, where the screen saver/video data file is complementary to the visually perceivable attributes provided by the decorations of the exterior surface of the cover body stored thereon.

6. The cover of claim 1, wherein the electronic component comprises a processor.

7. An electronic apparatus adapted to mate with a cover according to any preceding claim, the apparatus including a coupler configured to engage with the electronic component of the cover so as to enable the at least partial transfer of data from the cover to the electronic apparatus.

8. The apparatus of claim 7, wherein the electronic apparatus is a wireless mobile phone 200.

## Patentansprüche

1. Abdeckung, welche folgendes umfasst:
einen Abdeckungskörper 220, der mit einem elektronischen Gerät 200 verbunden werden kann;
wobei der Abdeckungskörper an seiner Außenfläche dekoriert ist, um das elektronische Gerät mit einer oder mehreren visuell erkennbaren Eigenschaften zu versehen; und
eine im Abdeckungskörper eingebettete elektronische Komponente 223, in der Daten gespeichert sind, die zumindest zum Teil an das elektronische Gerät übertragen werden sollen, um Funktionen des elektronischen Geräts derart anzupassen, dass es mit charakteristischen Merkmalen betrieben wird, welche komplementär zu den von den Dekorationen an der Außenfläche bereitgestellten, visuell erkennbaren Eigenschaften sind, während die Abdeckung mit dem elektronischen Gerät verbunden ist.

2. Abdeckung nach Anspruch 1, **dadurch gekennzeichnet, dass** die elektronische Komponente Daten umfasst, die einem Prozessor des elektronischen Geräts zu erkennen geben, welcher Gruppe einer Vielzahl von Abdeckungsgruppen die Abdeckung angehört, wobei jede Abdeckungsgruppe ein Dekormotiv hat.

3. Abdeckung nach Anspruch 1, **dadurch gekennzeichnet, dass** auf der elektronischen Komponente Daten gespeichert werden können, welche eine Datenart aus einer Ressourcenserverspezifikation, einer Emailadresse, einem elektronischen Coupon, einem Schriftstil, einem Identifizierungszeichen zur Identifikation der auswechselbaren Abdeckung sowie einem Zulassungscode umfassen.

4. Abdeckung nach Anspruch 1, **dadurch gekennzeichnet, dass** auf der elektronischen Komponente Daten gespeichert werden können, welche eine ausgewählte Datei aus einem Zeiger auf eine Audiodatei und einer Audiodatei umfassen, wobei die Audiodatei die von den Dekorationen an der Außenfläche des Abdeckungskörpers bereitgestellten, visuell erkennbaren Eigenschaften komplementiert.

5. Abdeckung nach Anspruch 1, **dadurch gekennzeichnet, dass** auf der elektronischen Komponente Daten gespeichert werden können, welche zumindest eine ausgewählte Datei aus einem Zeiger auf einen Bildschirmschoner, einem Zeiger auf eine Videodatei, einem Bildschirmschoner und einer Videodatei umfasst, wobei der Bildschirmschoner bzw. die Videodatei komplementär zu den von den Dekorationen an der Außenfläche des Abdeckungskörpers bereitgestellten, visuell erkennbaren Eigenschaften ist.

6. Abdeckung nach Anspruch 1, **dadurch gekennzeichnet, dass** die elektronische Komponente einen Prozessor umfasst.

7. Elektronisches Gerät, das mit einer Abdeckung gemäß einem der voranstehenden Ansprüche verbunden werden kann, wobei das Gerät einen Koppler einschließt, welcher derart konfiguriert ist, dass er mit der elektronischen Komponente der Abdeckung in Eingriff geht, um die zumindest teilweise Übertragung von Daten von der Abdeckung an das elektronische Gerät zu ermöglichen.

8. Gerät nach Anspruch 7, **dadurch gekennzeichnet, dass** es sich bei dem elektronischen Gerät um ein Mobilfunktelefon 200 handelt.

## Revendications

1. Couvercle comportant :
un corps de couvercle 220 conçu pour s'emboîter sur un appareil électronique 200 ;
le corps de couvercle comportant une surface externe décorée pour donner à l'appareil électronique un ou plusieurs attribut(s) perceptible(s) visuellement; et
un composant électronique 223 incorporé dans le corps de couvercle, dans lequel sont incorporées des données enregistrées destinées à être au moins partiellement transférées dans l'appareil électronique pour fournir à celui-ci des fonctions de personnalisation afin qu'il puisse fonctionner avec des caractéristiques complémentaires des attributs perceptibles visuellement constitués des décorations de la surface externe, quand le couvercle est emboîté sur l' appareil électronique.

2. Couvercle selon la revendication 1, dans lequel le composant électronique comporte des données l'identifiant à un processeur de l'appareil électronique, le couvercle appartenant à un groupe d'une pluralité de groupes de couvercles, chaque groupe de couvercles correspondant à un thème décoratif.

3. Couvercle selon la revendication 1, dans lequel le composant électronique est conçu pour avoir des donnée comportant au moins une spécification de serveur de ressource, une adresse de courriel, un coupon électronique, un style de police, un identificateur qui identifie le couvercle interchangeable et un code d'approbation enregistré sur celui-ci.

4. Couvercle selon la revendication 1, dans lequel le composant électronique est conçu pour avoir des données comportant un pointeur sélectionné vers un fichier de données audio et un fichier de données audio où le fichier de données audio constitue un complément aux attributs visuellement perceptibles fournis par les décorations de la surface externe du corps de couvercle enregistrées sur celui-ci.

5. Couvercle selon la revendication 1, dans lequel le composant électronique est conçu pour avoir des données comportant au moins un pointeur sélectionné vers un économiseur d'écran, un pointeur vers un fichier de données vidéo, un économiseur d'écran et un fichier de données vidéo, où l'économiseur d'écran/fichier de données vidéo est complémentaire des attributs visuellement perceptibles fournis par les décorations de la surface externe du corps de couvercle enregistrées sur celui-ci.

6. Couvercle selon la revendication 1, dans lequel le composant électronique comporte un processeur.

7. Appareil électronique conçu pour s'emboîter dans un couvercle conformément à n'importe laquelle des revendications précédentes, l'appareil comprenant un coupleur configuré pour s'engager avec le composant électronique du couvercle de façon à permettre le transfert au moins partiel de données du couvercle à l'appareil électronique.

8. Appareil selon la revendication 7, celui-ci étant un téléphone mobile sans fil 200.
